# EUROPEAN PATENT APPLICATION

(11) **EP 2 104 216 A1**
(43) Date of publication of application: **23.09.2009**
(21) Application number: 08425182.6
(22) Date of filing: 20.03.2008
(51) Int. Cl.: H02M 3/337, F03D 9/00, H02J 1/12, H02J 3/38

(54) **Electric power generating system with a plurality of electric power sources parallely feeding a DC voltage line which supplies power to an AC grid**

(71) Applicant: Ansaldo Sistemi Industriali S.p.A., 20126 Milano MI (IT)
(72) Inventor: Torri, Giordano, 20126 Milano (IT)
(74) Representative: Bonvicini, Davide

(57) **Abstract**

An electric power generating system (1) comprises a plurality of electric power sources (2,3), a power connection line (4), a plurality of electric power conversion units (5,6) whose inputs are connected to the outputs of respective electric power sources (2,3) and whose outputs are connected in parallel to the electric connection line (4), and power transformer means (7) for feeding an AC voltage into a power distribution network (8). Particularly, each electric power conversion unit (5,6) comprises a converter (10,11) adapted to convert the voltage generated by each electric power source (2,3) into a medium voltage DC voltage, the electric connection line (4) is configured for carrying medium voltage DC voltage. A DC/AC converter means (9) is connected to the electric connection line (4) and the power transformer means (7).

## Description

The present invention relates to an electric power generating system.

Particularly, the present invention relates to a system for generating electric power from renewable sources such as, without limitation, solar and wind power sources.

Electric power generating systems are known in the art and widely used in photovoltaic and wind power systems.

Electric power generating systems that use photovoltaic panels cover very large surfaces. As an example, a system that generates about 1,000 kW peak power covers about 10,000 m² area. Photovoltaic panels generate low voltage DC voltage whereas power distribution networks use either low or medium voltage AC voltage.

As used here, the term low voltage designates voltage values falling in a range from 50 to 1000 VAC or from 120 to 1500 VDC and the term medium voltage designates voltage values above 1000 VAC and 1500 VDC up to 30 kV.

Connection of a photovoltaic power system to the power distribution network requires static equipment for converting the DC voltage generated by photovoltaic panels into AC voltage values complying with the power distribution network specifications. Furthermore, a galvanic separation has to be ensured between the DC voltage section of the system and the AC voltage network. This galvanic separation is typically provided by a suitable transformer.

Due to the large area covered by a high-power photovoltaic system, such system is sometimes required to be divided into a plurality of sections, each being connected to a static DC/AC conversion apparatus, which collects the power produced by the panel arrays arranged in the proximity thereof. The system is divided into multiple sections to fulfill a number of requirements, such as the one of minimizing wire connections, ensuring operational redundancy throughout the various sections and optimizing management of electric safety issues. It shall be noted, in this respect, that connection has to be enabled between each static conversion apparatus and the power distribution network and that the safety requirements imposed by the power distribution network have to be fulfilled.

Typically, if the system comprises multiple static DC/AC conversion units, then each of them independently generates at its output an AC voltage at has the frequency of the power distribution network. This output has already been filtered by a low-pass filter, such as an L-C filter, which eliminates the high frequency harmonics generated by the inverter.

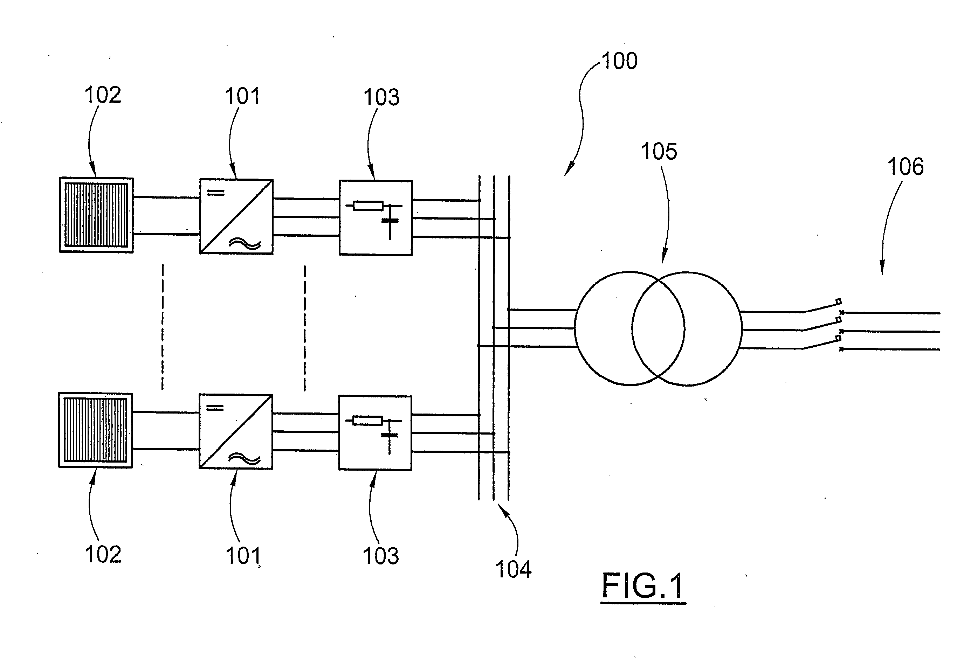

Figure 1 shows an electric power generating system 100 according to a first embodiment of the prior art. Referring to Figure 1, the system 100 comprises a plurality of conversion units, each having a DC/AC converter 101 which directly receives power from photovoltaic panels 102 and is adapted to generate a low voltage DC voltage at its output. The output of each DC/AC converter 101 is filtered by an L-C filter 103. It shall the noted that all the conversion units are connected in parallel along a common AC voltage connection line 104 with no galvanic separation therebetween. The AC voltage parallel connection line 104 terminates in a substation where a suitable transformer 105 transforms voltage into the level required by a power distribution network 106.

Nonetheless, the solution of Figure 1 suffers from a number of drawbacks. First, since the various units of the system cover a large surface, the lack of a galvanic separation therebetween makes it difficult both to locate one or more safety grounding points for the system and to ensure a low level of high frequency noise and/or eddy-currents possibly circulating among the various units due to the presence of static converters, typically operating in PWM. Furthermore, in the system of Figure 1, resonance and/or beat noise may be generated by the various parallel L-C filters over the common three-phase line due to the PWM carriers that do not necessarily have the same frequency. In this respect it shall be noted that this drawback might be only obviated by providing further arrangements, which would increase the complexity and costs of the system, and reduce its overall performance. With specific reference to the performance of the system, it shall be noted that the system has a non-optimal and reduced performance due to the use of low voltage lines. Indeed, even when the lines are a few hundreds of meters long, considerable power losses are caused, which may amount to various percentage points up to 5% of the power generated by the whole system. Also, it shall be noted that the DC voltage at the input of the static DC/AC converter is not regulated and is subjected to large changes, inherently caused by the behavior of photovoltaic cells. The minimum operating DC voltage of series- connected photovoltaic cells is required to be sufficiently high as to ensure proper operation of the static DC/AC converter when the power distribution network is at the maximum positive tolerance value. However, the maximum DC voltage generated by the cells should not exceed the value allowed by the converter without causing it to shut down. This would require non-optimized sizing of the static DC/AC converter, because it should be calculated for maximum current in minimum voltage conditions and for maximum voltage in minimum current conditions. This would involve oversizing of the static DC/AC converter to the detriment of its performance, which would reach a maximum at about 75% of the rated load and decrease by about 1 - 2 percentage points at the rated load and/or with high DC side voltages.

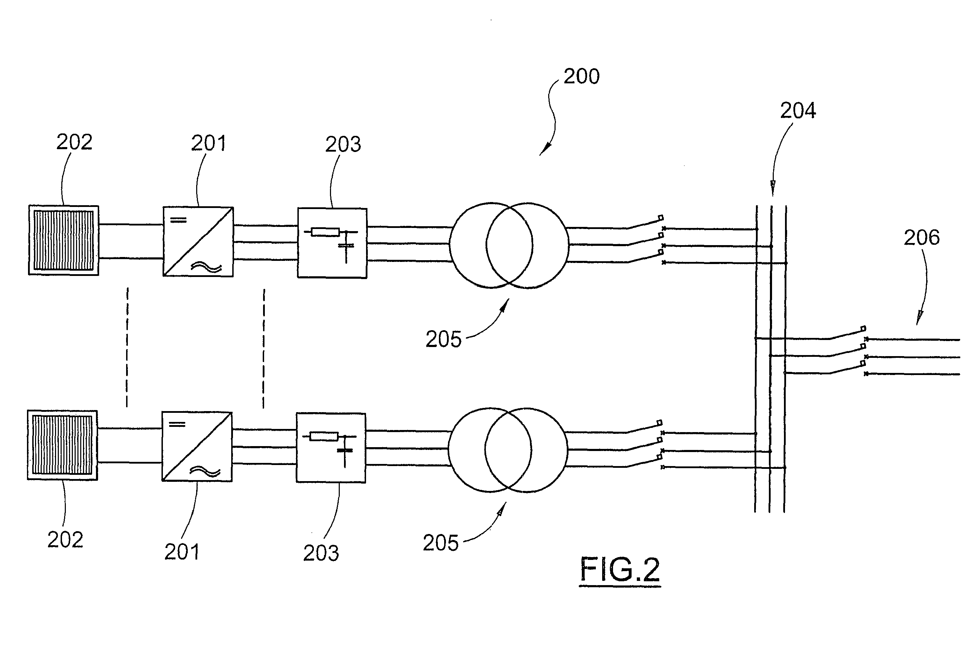

Figure 2 shows an electric power generating system according to a second embodiment of the prior art. Referring to Figure 2, the system 200 comprises a plurality of conversion units, each having a DC/AC converter 201 which directly receives power from photovoltaic panels 202, an L-C filter 203 connected to the output of the CD/AC converter 201 and a step-up isolation transformer 205 for generating a medium voltage AC voltage. In this case, all the conversion units are connected in parallel along a common medium voltage line 204 that carries AC voltage. The AC voltage parallel connection line 204 terminates in a substation where connection to the power distribution network 206 occurs. Each conversion unit requires a respective protective switch. An additional transformer may be required in this substation if the power distribution network has a voltage level higher than that generated by each static DC/AC conversion unit of the system.

The solution of Figure 2 also suffers from a number of drawbacks. First, installation of the transformer within the panel of the static DC/AC converter requires the panel to be appropriately sized for the voltage of the power distribution network. This voltage may at times be too high, normally above 10 kV, due to reasonable panel sizing, wherefore this solution might possibly require an additional transformer to be installed in the substation, thereby worsening the overall performance of the system. Like in the system of Figure 1, the above considerations both about the resonances between the L-C filters of the converters connected in parallel along the same AC line and about the impact of the variability of the AC voltage generated by the photovoltaic cells on the performance of the static DC/AC converter also apply to the system of Figure 2.

Furthermore it shall be noted that, when operating at 400 Volts, current on the power connection line might reach high values. For instance, each MW transmitted over a three-phase line requires a current well above 1500 A. A 3 MW system would require currents well above 4000 A, which would involve the use of very large section cables through considerable lengths, with apparent installation and cost problems, as well as performance losses as mentioned above.

An indication of the incidence of cable losses on the overall performance of the system might be given by the dissipations caused by a 400 V cable connection, assuming 1,000 kW transmitted power over a 300 - 500 meters length, which is reasonable for large surface systems. In this case, cable losses would fall in a range from 40 to 50 kW, with a 95-96% efficiency.

In view of the above, the need arises for an electric power generating system that can reduce cable losses and increase system efficiency.

Therefore, the object of the present invention is to provide an electric power generating system that has such features as to fulfill the above needs, while obviating the drawbacks of prior art.

This object is fulfilled by an electric power generating system as defined in claim 1.

Further features and advantages of the electric power generating system of the present invention, will be apparent from the following description of one preferred embodiment thereof, which is given by way of illustration and without limitation with reference to the accompanying figures, in which:
- Figures 1 and 2 are block diagrams of two exemplary electric power generating systems of the prior art,
- Figure 3 is a block diagram of a first embodiment of the electric power generating system of the present invention,
- Figure 4 is a block diagram of a second embodiment of the electric power generating system of the present invention,
- Figures 5 and 6 are block diagrams of details of the system as shown in Figures 3 and 4.

Referring to the annexed figures, numeral 1 generally designates an electric power generating system according to the present invention.

The system 1 comprises a plurality of electric power sources 2, 3, each electric power source being adapted to generate an output voltage and comprising at least one renewable power source.

The renewable power sources may include, for example, photovoltaic or wind power sources.

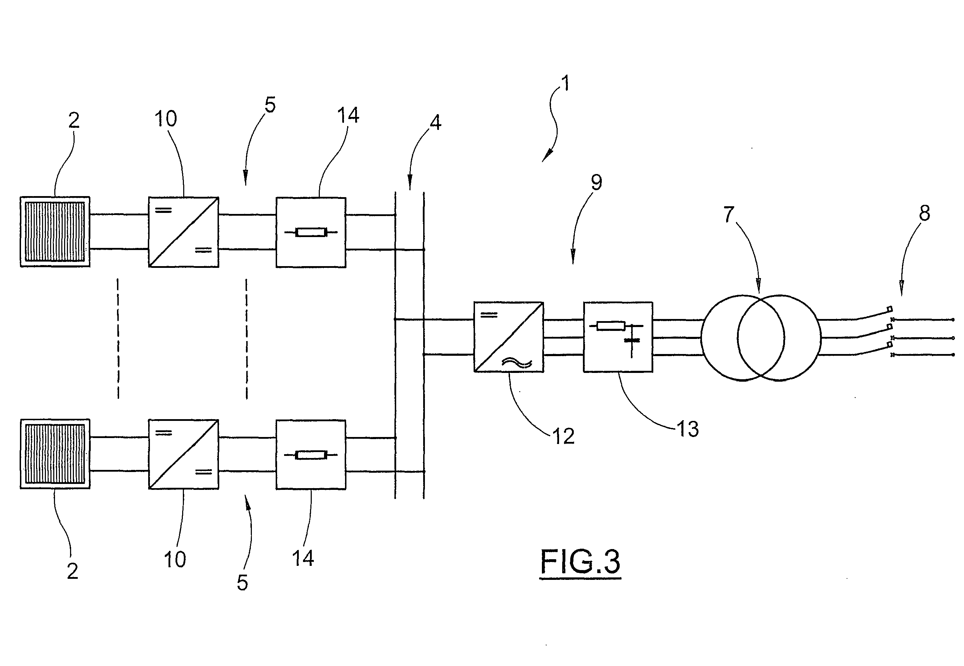

According to the embodiment of Figure 3, each of the electric power sources includes one or more photovoltaic sources 2 connected together to generate a low voltage DC voltage.

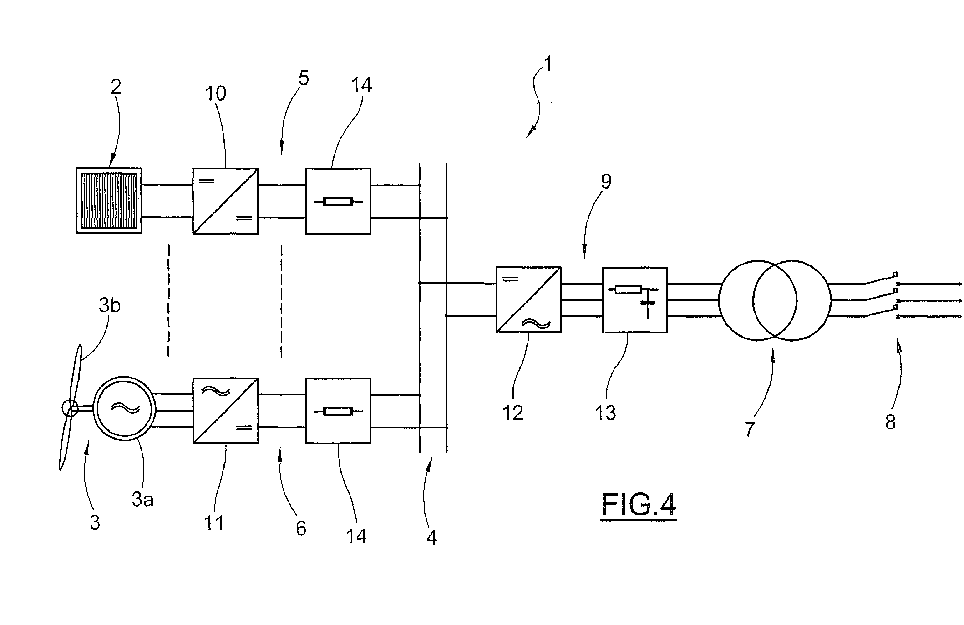

According to the embodiment of Figure 4, the electric power sources include photovoltaic and wind power sources 2, 3. Each photovoltaic power source comprises one or more photovoltaic sources and each wind power source comprises one or more wind sources 3 connected together to generate a medium voltage AC voltage.

The system 1 further comprises a power connection line 4 and a plurality of electric power conversion units 5, 6, where each electric power conversion unit 5, 6 has its input connected to the output of a respective power source 2, 3 and its output connected in parallel to the power connection line 4.

The system further comprises power transformer means 7 adapted to feed an AC voltage into a power distribution network 8.

Particularly, each electric power conversion unit 5, 6 comprises a converter 10, 11 adapted to convert the voltage generated by each power source 5, 6 into a medium voltage DC voltage. Accordingly, the power connection line 4 is configured for carrying medium voltage DC voltage. Therefore, the power connection line 4 represents the parallel connection line among the various conversion units 10, 11. Since all the power in the system 1 runs along this line 4 and the latter is a medium voltage line, cable losses will be dramatically reduced. It shall be further noted that the connection among the electric power conversion units 10, 11 via the DC power connection line 4, allows each of them to have an independent operation.

The system 1 also has DC/AC converter means 9, whose inputs are connected to the power connection line 4 and whose outputs are connected to the power transformer means 7, to convert the medium voltage DC voltage carried along the power connection line 4 into AC voltage and to deliver such AC voltage to the power transformer means 7.

According to one embodiment, the power transformer means 7 are adapted to transform and increase the AC voltage delivered to the DC/AC converter means 9 to generate an alternate voltage of amplitude and frequency complying with the power distribution network 8.

Particularly, the DC/AC converter means 9 comprise a DC/AC converter 12 which is adapted to receive at its input the medium voltage DC voltage carried along the power connection line 4 and to generate an AC voltage, and low-pass filter means 13 connected to the output of the DC/AC converter 12 to deliver an AC voltage filtered at the input of the transformer means 7.

It shall be noted that the DC/AC converter 12, whose operation is independent of the voltage generated by the natural power sources, allows regulation and stabilization of voltage on the power connection line 4. This allows optimal determination of power sizing and performance of the DC/AC converter 12.

In the case of photovoltaic panels 2, each of the electric power conversion units 5 connected to the photovoltaic sources 2 comprises a DC/DC converter 10 adapted to convert the low voltage DC voltage generated by the respective photovoltaic sources 2 into medium voltage DC voltage. Particularly each photovoltaic power source 2 supplies low-voltage power to the input of the static DC/DC converter 10. The output of the DC/DC converter 10 is a DC and medium voltage output and is directly connected to the main power line 4 which connects all the conversion units 5 in parallel.

The output of the DC/DC converter 10 is current-regulated whereas the voltage on the power connection line 4 is held constant and regulated by the DC/AC converter 12. Each electric power conversion unit 5 and thence each DC/DC converter 10 can regulate the current fed into the main power line 4 independently of the other electric power conversion units 5 connected in parallel along the power line 4. Particularly, the current value is regulated only according to the power generated by the respective photovoltaic panels 2 at a given time. The power transmitted by the DC/DC converter 10 to the power line 4 is simply given as a product of the voltage on the power line 4 by the regulated current outputted by the DC/DC converter 10.

Advantageously, each electric power conversion unit 5, 6 has protection means 14 for connecting the output of the respective converter 10, 11 to the power connection line 4 to protect and/or disconnect the respective electric power conversion unit 5, 6 from the power connection line 4 according to preset protection rules, e.g. after failure of the electric power conversion unit 5, 6 or due to operating requirements. This allows continued operation of the other electric power conversion units 5, 6 connected in parallel along the electric line 4 in case of failure of one or more of the other electric power conversion units 5, 6.

Thus, the constant voltage and medium voltage line 4 supplies power to the DC/AC converter 12 that has the purpose to convert the DC voltage on the AC voltage line 4 and feed the power generated by the system into the power distribution network 8. The DC/AC converter 12 operates independently of the other electric power conversion units 5, 6 and is also used to regulate the voltage on the DC power connection line 4. The AC output of the medium voltage converter 12 is adapted to the actual network voltage of the power distribution network 8 by the transformer 7. Thanks to this scheme of individual control of the electric power conversion units 5, 6 and 9, these units can operate in a fully independent manner: each electric power conversion unit 5, 6 generates, over the power line 4, the power that the photovoltaic panels 2 or the wind sources 3 can instantaneously provide, whereas the DC/AC converter 12 transmits the sum of the powers generated by the electric power conversion units 5, 6, whatever it is, over the power distribution network 8. If Vdc is designated as the voltage on the power connection line 4 regulated by the converter 12 and Idc is designated as the current delivered by the DC/DC converter 10 over the line 30, then each DC/DC converter 10 provides a power Pw = Vdc x Idc. It shall be noted that Idc is independently regulated by each DC/DC converter 10. This provides a modular system 1 that can be extended to very high powers.

As anticipated above, the solution of Figure 3 allows extended connection to integrated solar-wind power systems. Figure 4 shows such extension.

The operational independence provided by the main power line 4 allows connection of additional AC/DC converters 11 for converting the medium voltage AC voltage generated by the respective wind sources 3 into medium voltage DC voltage. Particularly, the wind sources 3 are embodied as rotating generators 3a driven by wind-turbines 3b. In this case, the use of a medium voltage line 4 is more convenient for use with wind generators 3 which are sized by themselves to operate with medium voltage, due to the unit powers being delivered.

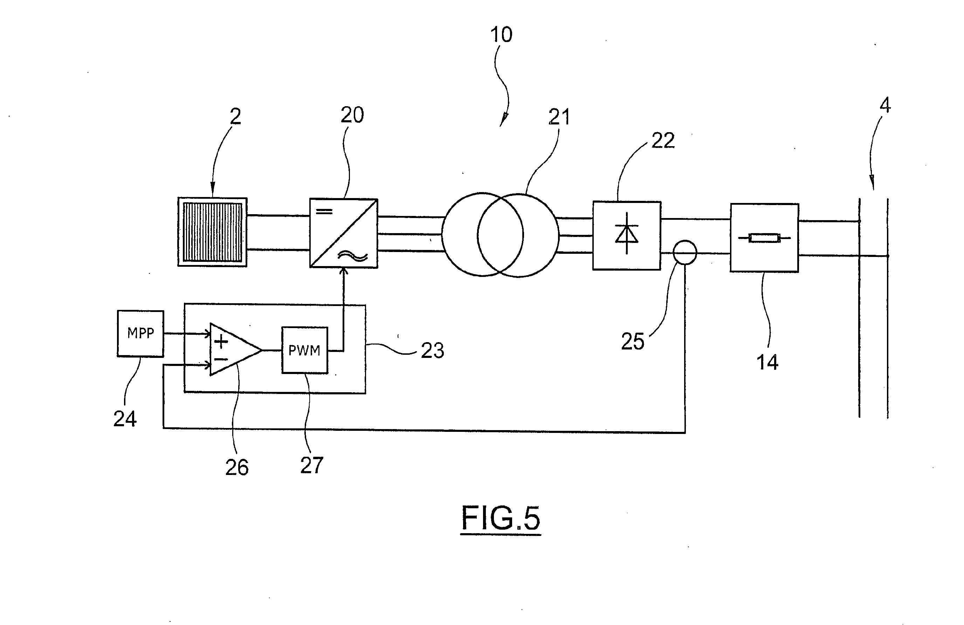

Figure 5 shows an exemplary embodiment of the DC/DC converter 10 of Figure 3. According to such embodiment, the DC/DC converter 10 comprises a DC/AC converter 20 connected to the outputs of the respective photovoltaic sources 2 to convert the low voltage DC voltage generated by the photovoltaic sources 2 into a low voltage single-phase or multi-phase AC voltage, a power transformer 21 connected to the output of the DC/AC converter 20 to transform and increase the low voltage AC voltage generated by the DC/AC converter 20 into a medium voltage AC voltage, and a rectifier 22 connected to the output of the transformer 21 to rectify the medium voltage AC voltage at the output of the transformer 21 and deliver a medium voltage DC voltage to the power line 4.

Particularly, the transformer 21 increases the voltage at the output of the DC/AC converter 20 at a level complying with the voltage on the power connection line 4. More particularly, the AC output of the transformer 21 is fed into a diode rectifier 22 to obtain a DC voltage equal to the one on the power line 4.

According to one embodiment, the transformer 21 has a sufficiently high short-circuit impedance, allowing a control circuit 21 of the DC/AC converter 20 to regulate the current that the conversion unit 10 generates on the power connection line 4.

The transformer 21 may be a high frequency transformer, because the AC output of the DC/AC converter 20 may have a frequency other than the 50/60 Hz frequency of the power distribution network, as only determined by optimized sizing of the assembly composed of the DC/AC converter 20 and the transformer 21.

The output of the rectifier 22 is connected to the power connection line 4 via protection and/or disconnection means 14. According to one embodiment, the protection and/or disconnection means consist of a pair of series-connected fuses on the two connection lines towards the power connection line 4.

According to one embodiment, the circuit 23 for regulating and controlling the DC/AC converter 20 includes means 25 for measuring current at the output of the rectifier 22, which consist, in this case, of a special DC transducer 25. The regulator circuit 23 further comprises a comparator 26 that compares the current value as measured by the current transducer 25 with a reference current value as determined by a maximum power control device 24 designed for controlling the power delivered by the power sources 2, 3. A regulation error at the output of the comparator 26 determines the PWM pulse width to be applied by the PWM modulator to the DC/AC converter 20.

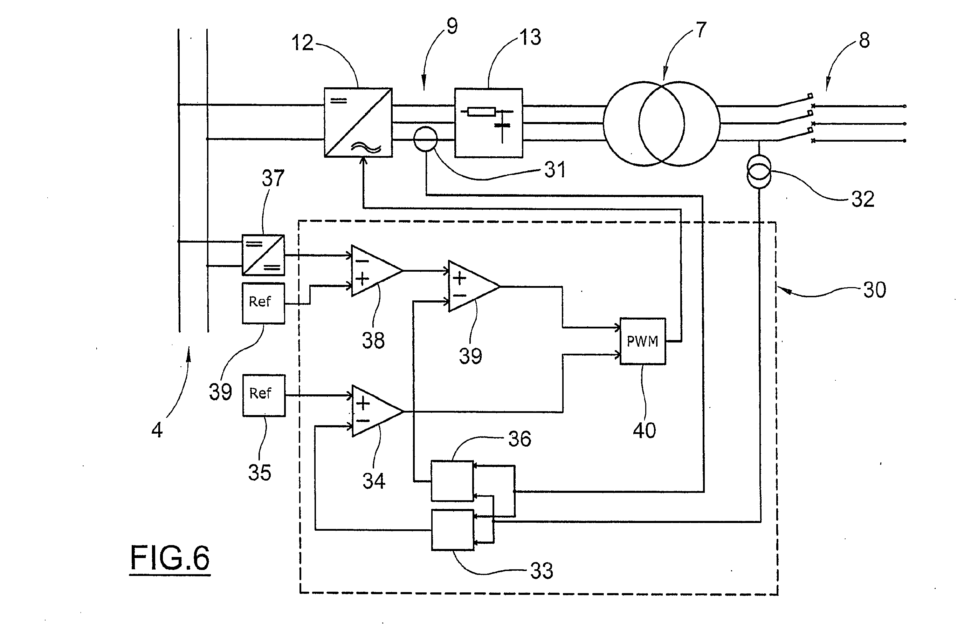

Figure 6 shows a schematic diagram of an embodiment of the DC/AC converter 12. For instance, the DC/AC converter 12 may be a 2-level voltage source inverter, an NPC inverter or a multi-level inverter. In the latter case, the DC/AC converter may be a capacitive DC voltage divider for dividing the DC voltage on the power connection line 4.

Advantageously, the output of the converter 12 may be filtered by the low-pass filter 13, such as a L-C filter, before being connected to the transformer 7, to eliminate the high-frequency harmonics generated by the converter 12.

In accordance with the embodiment as shown in Figure 6, the converter 12 has a control device 30 that regulates the DC voltage over the power connection line 4 while allowing the power received by the system 1 to be fed into the power distribution network 8. Such control device 30 can maintain the voltage on the power connection line 4 constant and independent of any fluctuation in the DC voltage generated by the photovoltaic panels 2.

The control device 30 comprises a current transducer 31 and a voltage transducer 32, which are adapted to provide respective feedback quantities to the control device 30 and a processing block 33 for determining the reactive power exchanged between the converter 12 and the power distribution network 8. This value is fed at the input of a reactive power regulator 34 which receives, at its input, a reference value 35 for comparison. This regulator 34 reacts to adjust the reactive power exchanged with the power distribution network 8 to the preset reference value 35.

The control device 30 further comprises a processing block 36 to determine the active power exchanged with the power distribution network 8. A voltage transducer 37 measures DC voltage on the power connection line 4 whereas a regulator 38 compares such measured voltage with a reference 39, i.e. the DC voltage value to be used for stabilization of the power connection line 4 at every load level. The output of the regulator 38 and the power as determined by the block 36 are fed into the input of an active power regulator 39, which is adapted to increase the active power flowing into the power network 8 when voltage on the power connection line 4 tends to increase and vice versa. The outputs of the regulators 34 and 39 control a PWM modulator 40 that determines the exact modulation index for the converter 12.

An application of the system as shown in Figure 3 will be described hereinbelow. Each photovoltaic power source 2 may include multiple series-parallel elements and may provide a DC voltage of 500-600 VDC, and deliver a total power of a few tens of kW, typically 50 - 100 kW. The DC/AC converter 20 generates an AC output voltage of 400 VAC, whereas the transformer 21 increases the voltage to 3,300 VAC. The DC/AC converter 20 may operate at output frequencies of up to a few kHz, for example 2 kHz, wherefore the size of the transformer 21 can be reduced such as to enable integration thereof in the same apparatus as the converter 20.

Thus, the power connection line 4 has a rated voltage of 4500 VDC, which value is rectified by the rectifier 22 that rectifies the 3,300 VAC voltage at the output of the transformer 21 and directly feeds the converter 12, which both regulates the voltage on the power connection line and generates the electric power on the power network 4. The control device 30 of the DC/AC converter 12 reacts by increasing the power transmitted to the power network 8 when the DC voltage over the power connection line 4 tends to increase and by decreasing the power transmitted to the power network 8 when the voltage of the power connection line 4 tends to decrease. A voltage increase in the power connection line 4 may be caused, for example, by an increase in the generated power, whereas a voltage decrease in the line 4 may be caused by a corresponding decrease in the generation of power by the alternative power sources 2.

The filter 13 may be a low-pass L-C circuit that eliminates the high frequencies of the PWM modulation of the inverter 12 and turns the waveform of the voltage fed into the power network 8 into a sinusoidal waveform.

If electric power conversion units 10 provided, that have 50 kW power each and 100 units are connected in parallel, a 5000 kW system will be obtained. Particularly, the electric power conversion units 10 might be arranged along a straight power connection line 4 having a few kilometers extension and the converter 12 might be located at the center of such arrangement. Thus, the power connection line 4 should carry a current Idc = 50kW x 100 / 4500 / 2 = 555 A. In this case, the bipolar cable required for the connection would have a 240 mm² section. The DC/AC converter 12 might be a single 5000 kW, 3300 V unit, which would allow simple installation thereof in a single substation meeting all the requirements for connection to the power network 8.

As compared with prior art solutions, as described with reference to Figures 1 and 2, the system 1 of the present invention provides the advantage of recovering several performance percentage points over the cables that are used for the power connection line, using a medium voltage power connection line.

Particularly, the difference between the low voltage connection cable losses and the medium voltage cable losses can reach 3 - 5 performance percentage points in favor of the latter.

An accurately designed electric DC/DC conversion unit can have a 98.5% performance. Furthermore, accurate sizing of the DC/AC conversion stage to the power distribution network, which is aimed at maintaining a constant DC voltage over the power connection line, allows a recovery of 0.5 to 1 performance percentage points for the converter. Therefore, the system of the present invention can recover as a whole from 2 to 4 performance percentage points as compared with the prior art systems as shown in Figures 1 and 2.

The solution provided herein sets no maximum limit to the overall power of the system, unlike the solutions that use low voltage connections. This solution allows each conversion unit to be independent from the others in terms of power generation, reduces system losses and allows management of a single connection point to the power distribution network, thereby simplifying the problem of system protections.

As an example, an integrated solar-wind power system may include a photovoltaic source that generates from 1 to 2 MW powers and a wind turbine that can generate from 2 to 3 MW. The wind generator may be conveniently sized with a working voltage of 3 kVAC. Therefore, the DC voltage connection line between the conversion units will have a voltage level of 4 kVDC. An even higher voltage level may be used on the power connection line in response to higher powers. For example, wind power generators up to 5 MW may require an AC working voltage of 6 kVAC and the DC voltage line would require a corresponding level of 8.2 kVDC.

It will be appreciated from the above description that the electric power generating system of the invention can fulfill the objects as set out in the introduction of this disclosure and obviate prior art drawbacks.

Particularly, the system of the present invention allows medium voltage connection of the various static conversion apparatus arranged over a large surface to the substation connecting to the power distribution network. This arrangement reduces cable losses and improves system efficiency.

The system of the present invention further allows stabilization of the DC voltages generated by the photovoltaic sources, i.e. the input voltage to the DC/AC conversion voltage to the power distribution network. This increases system performance and optimizes DC/AC converter sizing.

The system of the present invention further allows independent operation of each conversion unit connected to the various sources of the photovoltaic system and no interference therebetween in terms of noise and eddy-current induced oscillations. It shall be further noted that the system can ensure high performance throughout a wide load range and allows management of electric safety to the power distribution network from a single point, i.e. the substation.

Those skilled in the art will obviously appreciate that a number of changes and variants may be made to the electric power generating system of the invention as described hereinbefore to meet specific needs, without departure from the scope of the invention, as defined in the following claims.

## Claims

1. An electric power generating system (1) comprising:
- a plurality of electric power sources, each electric power source being adapted to generate an output voltage and comprising at least one renewable power source,
- a power connection line (4),
- a plurality of electric power conversion units (5,6), each electric power conversion unit (5,6) having its input connected to the output of a respective electric power source (2,3) and its output connected in parallel to said electric connection line (4),
- power transformer means (7) adapted to feed an AC voltage into a power distribution network (8),
**characterized in that** each electric power conversion unit (5,6) comprises a converter (10,11) adapted to convert the voltage generated by each power source (5,6) into a medium voltage DC voltage, said power connection line (4) is configured for carrying medium voltage DC voltage, and DC/AC converter means (9) are provided, whose inputs are connected to said power connection line (4) and whose outputs are connected to said power transformer means (7), to convert the medium voltage DC voltage carried along said power connection line (4) into AC voltage and to deliver said AC voltage to said power transformer means (7) for feeding it into said power distribution network (8).

2. A system (1) as claimed in claim 1, wherein said power transformer means (7) are adapted to transform and increase the AC voltage delivered to the DC/AC converter means (9) to generate an alternate voltage of amplitude and frequency complying with said power distribution network (8).

3. A system (1) as claimed in claim 1 or 2, wherein said DC/AC converter means (9) comprise:
- a DC/AC converter (12) which is adapted to receive at its input the medium voltage DC voltage carried along said power connection line (4) and to generate an AC voltage, and
- low-pass filter means (13) connected to the output of the DC/AC converter (12) to deliver an AC voltage filtered at the input of the transformer means (7).

4. A system (1) as claimed in any one of claims 1 to 3, wherein one or more electric power sources include each one or more photovoltaic sources (2) connected together to generate a low voltage DC voltage.

5. A system (1) as claimed in claim 4, wherein each of the electric power conversion units (5) connected to the photovoltaic sources (2) comprises a DC/DC converter (10) adapted to convert the low voltage DC voltage generated by the respective photovoltaic sources (2) into medium voltage DC voltage.

6. A system (1) as claimed in claim 5, wherein said DC/DC converter (10) comprises:
- a DC/AC converter (20) connected to the outputs of the respective photovoltaic sources (2) to convert the low voltage DC voltage generated by the photovoltaic sources (2) into a low voltage AC voltage,
- a power transformer (21) connected to the output of the DC/AC converter (20) to transform and increase the low voltage AC voltage generated by the DC/AC converter (20) into a medium voltage AC voltage,
- a rectifier (22) connected to the output of the transformer (21) to rectify the medium voltage AC voltage at the output of the transformer (21) and deliver a medium voltage DC voltage.

7. A system (1) as claimed in any one of claims 4 to 6, wherein the photovoltaic sources (2) are identified by solar panels.

8. A system (1) as claimed in any one of claims 1 to 3, wherein one or more electric power sources include each one or more wind sources (3) connected together to generate a medium voltage AC voltage.

9. A system (1) as claimed in claim 8, wherein each of the electric power conversion units (11) connected to the wind sources (3) comprises an AC/DC converter (11) adapted to convert the medium voltage AC voltage generated by the respective wind sources (3) into medium voltage DC voltage.

10. A system (1) as claimed in claim 8 or 9, wherein the wind sources (3) are identified by rotating generators (3a) driven by wind turbines (3b).

11. A system (1) as claimed in any one of claims 1 to 10, wherein each electric power conversion unit (5, 6) has protection means (14) for connecting the output of the respective converter (10,11) to said power connection line (4) to protect and/or disconnect the respective electric power conversion unit (5,6) from the power connection line (4) according to preset protection rules.

12. A system (1) as claimed in any one of claims 1 to 11, wherein the electric power conversion units (5,6) operate independently from one another.

13. A system (1) as claimed in any one of claims 1 to 12, wherein the electric power conversion units (5,6) operate independently from one another, so that the electric power conversion units (5,6) can be connected to power sources (2,3) even distinct from one another.

14. A system (1) as claimed in any one of claims 1 to 13, wherein said DC/AC converter means (9) include control means (30) for regulating and maintaining a constant DC voltage on said power connection line (4), regardless of the fluctuations in the output voltage generated by said power sources (2, 3).
